# EUROPEAN PATENT SPECIFICATION

(11) **EP 4 394 594 B1**
(45) Date of publication and mention of the grant of the patent: **25.02.2026**
(21) Application number: 23195131.0
(22) Date of filing: 04.09.2023
(51) Int. Cl.: G06F 9/455, G06F 11/07, G06F 11/14

(54) **FLEXIBLE VIRTUALIZATION OF PERFORMANCE MONITORING**
FLEXIBLE VIRTUALISIERUNG VON LEISTUNGSÜBERWACHUNG
VIRTUALISATION FLEXIBLE DE SURVEILLANCE DE PERFORMANCE

(30) Priority: 30.12.2022 US 202218091975
(43) Date of publication of application: 03.07.2024
(73) Proprietor: Intel Corporation, Santa Clara, CA 95054 (US)
(72) Inventor: Chaikin, Baruch, 20196 Haifa (IL); Yasin, Ahmad, 31015 Haifa (IL)
(74) Representative: Goddar, Heinz J.

(56) References cited:
- WO-A2-02/052404
- US-A1- 2015 121 366
- INTEL: "Intel 64 and IA-32 Architectures Software Developer's Manual", 1 September 2016 (2016-09-01), XP055493494, Retrieved from the Internet <URL:https://www.intel.com/content/dam/www/public/us/en/documents/manuals/64-ia-32-architectures-software-developers-manual.pdf> [retrieved on 20180718]

## Description

### FIELD OF INVENTION

The present invention relates to flexible virtualization of performance counters.

### BACKGROUND

A processor or execution core in an information processing system may include performance counters for monitoring and logging performance information. Typically, each performance counter would be controlled by one or more control or configuration registers, or portions of a one or more control or configuration registers, associated with the counter.
US 2015/121366 A1 refers to virtualization exceptions. In one embodiment, a processor includes instruction hardware, control logic, and execution hardware. The instruction hardware is to receive a plurality of instructions, including an instruction to enter a virtual machine. The control logic is to determine, in response to a privileged event occurring within the virtual machine, whether to generate a virtualization exception. The execution hardware is to generate a virtualization exception in response to the control logic determining to generate a virtualization exception.
Intel: "Intel 64 and lA-32 Architectures Software Developer's Manual", 1 September 2016, is a reference set for developers working with processors. It contains detailed information about the architecture, programming, and system-level operations of Intel's 64-bit and IA-32 processors.
The invention is set forth in the independent claims. Embodiments of the invention are defined in the dependent claims.

### BRIEF DESCRIPTION OF DRAWINGS

Various examples in accordance with the present disclosure will be described with reference to the drawings, in which:
FIG. 1 illustrates a processor for flexible virtualization of performance monitoring according to an embodiment.
FIG. 2 illustrates a layout of a bitmap for a flexible virtualization of performance monitoring according to an embodiment.
FIG. 3 illustrates a method for flexible virtualization of performance monitoring according to an embodiment.
FIG. 4 illustrates an example computing system.
FIG. 5 illustrates a block diagram of an example processor and/or System on a Chip (SoC) that may have one or more cores and an integrated memory controller.
FIG. 6(A) is a block diagram illustrating both an example in-order pipeline and an example register renaming, out-of-order issue/execution pipeline according to examples.
FIG. 6(B) is a block diagram illustrating both an example in-order architecture core and an example register renaming, out-of-order issue/execution architecture core to be included in a processor according to examples.
FIG. 7 illustrates examples of execution unit(s) circuitry.
FIG. 8 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for flexible virtualization of performance monitoring. According to some examples, an apparatus includes a plurality of performance monitoring hardware resources and an instruction decoder to decode a first instruction to access a first performance monitoring hardware resource of the plurality of performance monitoring hardware resources. In response to the first instruction being received by a virtual machine, the apparatus is to determine whether the first performance monitoring hardware resource is allocated to the virtual machine based on an allocation model to allow any set of the performance monitoring hardware resources to be allocated to the virtual machine, execute the first instruction within the virtual machine in response to a determination that the first performance monitoring hardware resource is allocated to the virtual machine, and raise an exception within the virtual machine in response to a determination that the first performance monitoring hardware resource is not allocated to the virtual machine.

As mentioned in the background section, a processor or execution core in an information processing system may include performance counters for monitoring and logging performance information. Typically, each performance counter would be controlled by one or more control or configuration registers, or portions of a one or more control or configuration registers, associated with the counter.

Such a processor or execution core may support virtualization of performance counters or other performance monitoring hardware. For example, an existing programming model for a processor or execution core may provide only two options: (1) allocating all performance counters to a virtual machine (VM), and (2) allocating no performance counters to a VM.

In contrast, embodiments described in this specification may provide a more flexible virtualization model, for example, by allowing a virtual machine monitor (VMM), hypervisor, or other system software to selectively allocate none, some, or all of the performance counters for use by one or more VMs and to selectively allocate none, some, or all of the performance counters to the VMM, hypervisor or other system software. A virtualization model according to this example may be referred to as a mixed virtualization model and may be desired, for example, to provide for a VMM to profile or monitor execution of one or more VMs that need performance counters for their own use (e.g., for dynamically optimizing process performance, or for arming watchdogs).

The preceding discussion and the following description(s) of embodiments, based on performance counters, are provided as examples. Embodiments may include and/or relate to other performance monitoring hardware resources or any other hardware resources that may be treated as a group and/or as individual parts of or subgroups of a group.

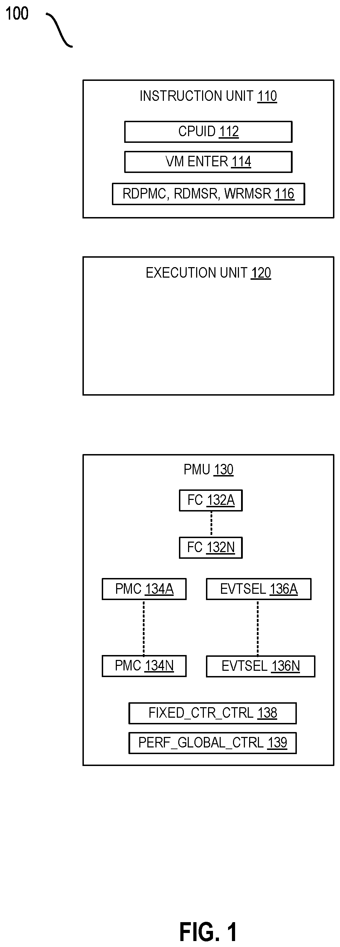

FIG. 1 illustrates processor 100 for flexible virtualization of performance monitoring according to an embodiment.

Processor 100 may represent all or part of a hardware component including one or more processors, processor cores, or execution cores integrated on a single substrate or packaged within a single package, each of which may include multiple execution threads and/or multiple execution cores, in any combination. Each processor represented as or in processor 100 may be any type of processor, including a general-purpose microprocessor, such as a processor in the Intel^{®} Core^{®} Processor Family or other processor family from Intel^{®} Corporation or another company, a special purpose processor or microcontroller, or any other device or component in an information processing system in which an embodiment may be implemented. Processor 100 may be architected and designed to operate according to any instruction set architecture (ISA), with or without being controlled by microcode. For convenience and/or examples, some features (e.g., instructions, performance counters, registers, exceptions, etc.) may be referred to by a name associated with a specific processor architecture (e.g., Intel^{®} 64 and/or IA32), but embodiments are not limited to those features, names, architectures, etc.

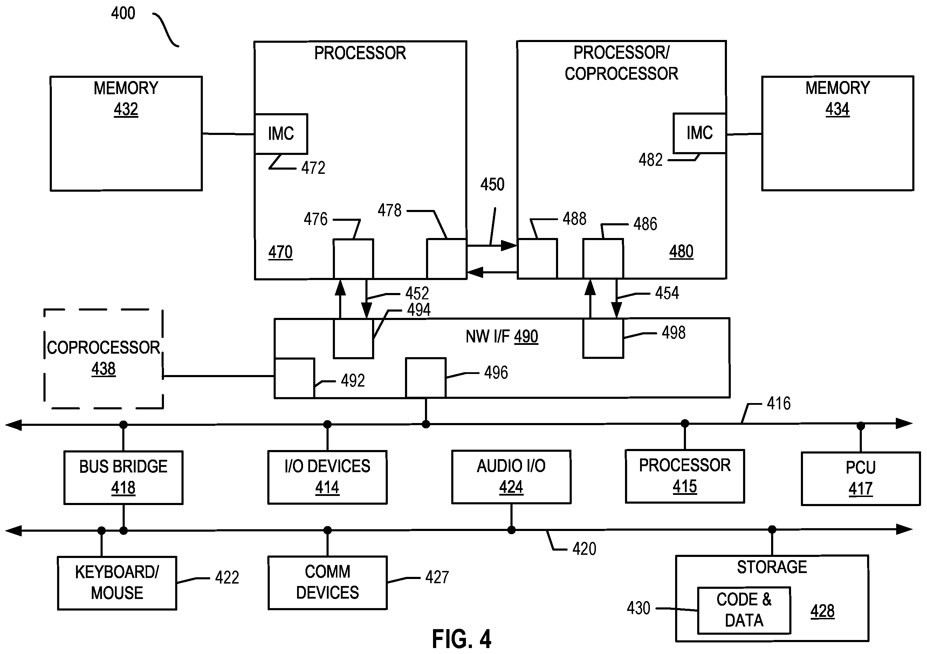

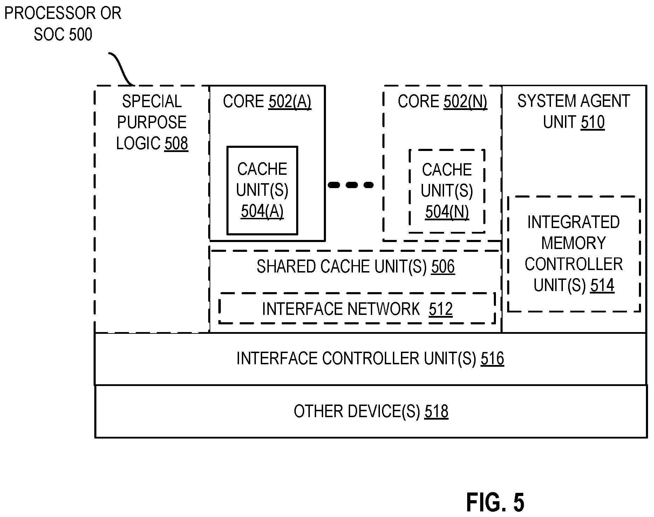

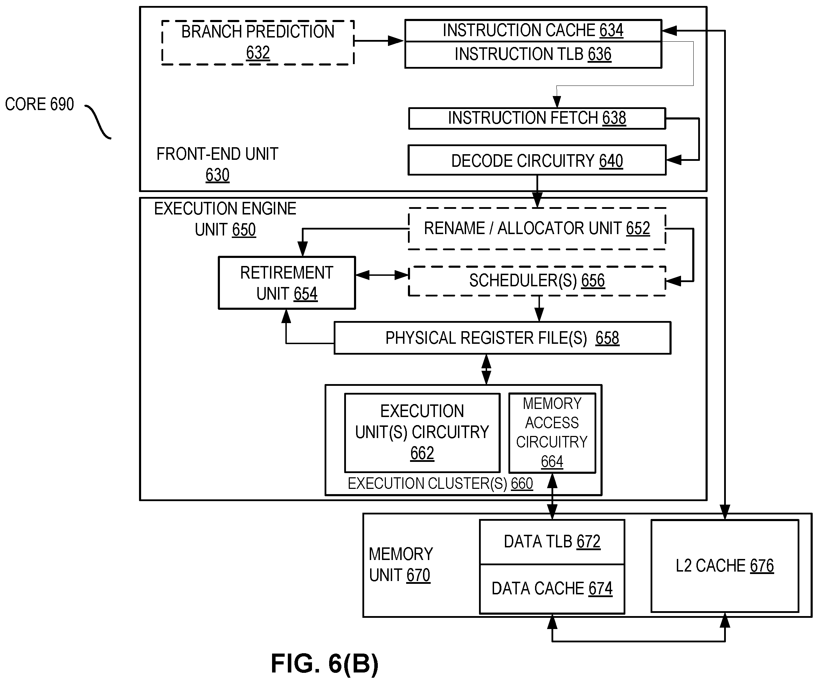

Processor 100 may be implemented in logic gates and/or any other type of circuitry, all, or parts of which may be included in a discrete component and/or integrated into the circuitry of a processing device or any other apparatus in a computer or other information processing system. For example, processor 100 in Figure 1 may correspond to and/or be implemented/included in any of processors 470, 480, or 415 in Figure 4, processor 500 or one of cores 502A to 502N in Figure 5, and/or core 690 in Figure 6B, each as described below.

Processor 100 may support virtualization of resources according to any approach (e.g., Intel^{®} VMX). Generally, the concept of virtualization in information processing systems allows multiple instances of one or more operating systems (each, an "OS") to run on a single information processing system, even though each OS is designed to have complete, direct control over the system and its resources. Virtualization typically includes using system software (e.g., a virtual machine monitor (VMM) or a hypervisor, any such software to be referred to for convenience as a VMM, host, or host software) to present to each OS a VM having virtual resources, including one or more virtual processors, that the OS may completely and directly control, while the VMM maintains a system environment for implementing virtualization policies such as sharing and/or allocating the physical resources among the VMs.

A processor in an information processing system may support virtualization, for example, by operating in two modes - a "root" mode in which software runs directly on the hardware, outside of any virtual environment, and a "non-root" mode in which software runs at its intended privilege level, but within a virtual environment hosted by a VMM. A VMM may run in root mode or in non-root mode (e.g., in a layered or nested virtualization model). In the virtual environment, certain events, operations, and situations, such as interrupts, exceptions, and attempts to access privileged registers or resources, may be intercepted, i.e., cause the processor to exit its virtual environment (a "VM exit") so that the VMM may operate, for example, to implement virtualization policies. The processor may support instructions for establishing, entering (a "VM entry"), exiting, and maintaining virtual environments, and may include register bits or other structures that indicate or control virtualization capabilities of the processor.

Processor 100 may control/constrain the operation of VMs, create/maintain virtual environments, and/or implement virtualization policies according to information stored in internal memory (e.g., cache and/or registers) and/or external memory (e.g., system memory). The information may be stored according to a fixed format or flexible format. For example, the information may be stored in fields or entries in a data structure that may be referred to a virtual machine control structure (VMCS) or virtual machine control block (VMCB). Any such structure or other source of such information (to be referred to for convenience as a VMCS) may contain, for example, state of a guest or guest software (i.e., software running within a VM) or guests, state of a VMM, execution control information indicating how a VMM is to control operation of a guest or guests, information regarding VM exits and VM entries. In some embodiments, multiple VMCSs may be used to support multiple VMs.

As shown, processor 100 includes instruction unit 110, execution unit 120, and performance monitoring unit 130. Processor 100 may include any number of each of these elements (e.g., multiple execution units) and/or any other elements not shown in Figure 1.

Instruction unit 110 may correspond to and/or be implemented/included in front-end unit 630 in Figure 6B, as described below, and/or may include any circuitry, logic gates, structures, and/or other hardware, such as an instruction decoder, to fetch, receive, decode, interpret, schedule, and/or handle instructions, such as a processor identification instruction 112 (e.g., CPUID as described below), a VM enter instruction 114, and one or more read or write instructions 116 (e.g., RDMSR, WRMSR, RDPMC as described below) to be executed by processor 200. Any instruction format may be used within the scope of the present invention; for example, an instruction may include an opcode and one or more operands, where the opcode may be decoded into one or more micro-instructions or micro-operations for execution by execution unit 120. Operands or other parameters may be associated with an instruction implicitly, directly, indirectly, or according to any other approach. VM enter instruction 114 may represent any one or more instructions, in any instruction set, by which control may be transferred to a VM, for example, by a VMM for an initial entry into a newly created VM or for a subsequent entry (e.g., following a previous VM entry and a VM exit) into a previously created VM.

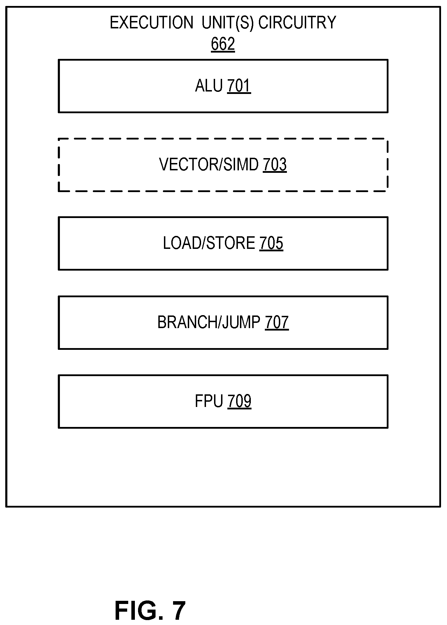

Execution unit 120 may correspond to and/or be implemented/included in any of execution engine 650 in Figure 6B and/or execution unit circuitry 662 in Figure 7, each as described below, and/or include any circuitry, logic gates, structures, and/or other hardware, such as arithmetic units, logic units, floating point units, shifters, etc., to process data and execute instructions, micro-instructions, and/or micro-operations. Execution unit 120 may represent any one or more physically or logically distinct execution units.

Performance monitoring unit (PMU) 130 may include any circuitry, logic, structures, and/or other hardware to measure, monitor, and/or log performance information related to processor 100, software running on processor 100, and/or a system including processor 100. PMU 130 may include one or more performance monitoring (perfmon) counters 132A to 132N and 134A to 134N to count occurrences of events, events of a particular type, operations, actions, conditions, processor parameters, or any other measure of or related to performance (any of which may be referred to for convenience as an event and/or counting an event). For example, a perfmon counter may increment for each occurrence of a selected event or increment for each clock cycle during a selected event. The events may include any of a variety of events related to execution of program code on processor 100, such as branch mispredictions, cache hits, cache misses, translation lookaside buffer hits, translation lookaside buffer misses, etc. Therefore, perfmon counters may be used in efforts to tune or profile program code to improve or optimize performance. One of more perfmon counters (e.g., 132A to 132N) may be fixed function (e.g., dedicated to counting only a particular event) counters, any of which may be referred to as a fixed perfmon counter, fixed counter, FC, FCx where x is a number, FIXED_CTR, FIXED_CTRx where x is a number, etc.) One or more perfmon counters (e.g., 134A to 134N) may be general-purpose (e.g., programmable to count a particular selectable event and reconfigurable to count a different selectable event) counters, any of which may be referred to as a general-purpose perfmon counter, general-purpose counter, programmable perfmon counter, programmable counter, PMC, PMCx where x is a number, etc.).

Processor 100 also includes a mechanism for PMU 130 to be used. For example, PMU 130 may include and/or be connected to one or more storage locations for accessing (e.g., reading, programming, enabling) counters. In embodiments, such storage locations may be model/machine specific registers (MSRs) and/or may be referred to for convenience as MSRs. Some such MSRs may be specific to a processor or processor architecture (e.g., Intel^{®} 64 and/or IA32) and/or some may be more specifically described below. In various embodiments, MSRs (or any set or subset of MSRs) may be within and/or accessible by a core (core-scoped) or external to a core (e.g., within an uncore or system agent) and/or accessible by more than one core (package-scoped).

In an embodiment including fixed-function perfmon counters 132A to 132N and general-purpose perfmon counters 134A to 134N, processor 100 may include event selection MSRs 136A to 136N (any of which may be referred to as an EVTSEL, PERFEVTSEL, EVTSELx where x is a number, or PERFEVTSELx where x is a number MSR), each of which correspond to one of PMCs 134A to 134N and may be programmed to select (e.g., with bits 7:0) an event to be counted by its corresponding PMC and to enable (e.g., with bit 22, which may be set to 1 to enable and cleared to 0 to disable) its corresponding PMC.

Since each of EVTSEL MSRs 136A to 136N correspond to or is otherwise associated with a single one of PMCs 134A to 134N, EVTSEL MSRs 136A to 136N may be referred to as non-mixed perfmon MSRs. In contrast, processor 100 may include one or more other MSRs that may be associated with (e.g., used to configure, control, provide status of) more than a single FC and/or PMC and may be referred to as mixed perfmon MSRs. For example, a fixed perfmon counter control MSR 138 (which may be referred to as FIXED_CTR_CTRL) may be associated with multiple FCs (e.g., to selectively enable or disable multiple FCs with a single write to the MSR) and/or a global perfmon counter control MSR (which may be referred to as PERF_GLOBAL_CTRL) 139 may be associated with multiple FCs and/or PMCs (e.g., to selectively enable or disable multiple FCs and/or PMCs with a single write to the MSR). Other non-mixed and/or mixed perfmon MSRs are possible, with some examples given below.

In embodiments, the instruction set of processor 100 may include instructions to access (e.g., read and/or write) to perfmon counters and/or MSRs associated with perfmon counters, such as an instruction to read a perfmon counter (RDPMC), an instruction to read from an MSR (RDMSR), and an instruction to write to an MSR (WRMSR).

Processor 100 may also include a mechanism to indicate support for and enumeration of performance monitoring capabilities and/or flexible virtualization of performance monitoring according to an embodiment. For example, in response to an instruction (e.g., in an Intel^{®} x86 processor, a CPUID instruction executed with EAX=0AH), one or more processor registers (e.g., EAX, EBX, ECX, EDX) may return information to indicate whether, to what extent, how, etc. performance monitoring is supported (e.g., number of perfmon counters available and/or events that may be counted).

Instructions associated and/or used in connection with performance monitoring (e.g., CPUID, RDPMC, RDMSR, and WRMSR) may be intercepted (e.g., the processor may be configured to cause a VM exit) by a VMM so that performance monitoring may be virtualized (e.g., provide and/or restrict VM access to performance monitoring capabilities).

Embodiments may provide for virtualization of performance monitoring to include a capability for a VMM to selectively allocate any possible subset of a processor's perfmon counters for VM use. For example, selective allocation may allow for any combination of perfmon counters to be allocated to a VM and/or be implemented with a virtualization model that includes (e.g., as bits and/or fields in a VMCS) two new VM execution controls, to be referred to as PERF_VIRT and PERF_MASK.

The PERF_VIRT control may be implemented, for example, with a single bit in a VMCS, the value of which controls whether PERF_MASK is used to control which perfmon counters are allocated to a VM. For example, if the value of PERF_VIRT is 1, the values in PERF_MASK define (as described below) which perfmon counters are allocated to the VM and which perfmon counters are allocated to the VMM. If the value of PERF_VIRT is 0, PERF_MASK is not used, and allocation of perfmon counters is defined according to a prior approach (e.g., all perfmon counters are allocated to the VM or all perfmon counters are allocated to the VMM).

The PERF_MASK control may be implemented, for example, with a field (e.g., a 64-bit field) for a bitmask in the VMCS. Each bit in the bitmask may correspond to one of the perfmon counters and may be used to control whether the corresponding perfmon counter is allocated to the VM (e.g., when set to 1, the corresponding perfmon counter is allocated to the VM; when cleared to 0, the corresponding perfmon counter is allocated to the VMM).

In embodiments, when a processor is in non-root mode executing guest software on a VM, the processor may be configured to support flexible allocation of performance monitoring resources by responding to some attempts to access some performance monitoring resources without causing VM exit. For example (as further detailed below), attempted accesses to some perfmon counters and some perfmon MSRs may result in the processor raising/causing an exception (e.g., a general protection exception, #GP, #GP(0), a fault, an error, etc.) without/instead of a VM exit, others may be responded to in a predefined manner without an exception or VM exit, and others may be allowed without an exception or VM exit. Such an attempt may be made using an instruction to be received and/or decoded by instruction unit 110. The processor's response may be based on the instruction, the configuration of the processor, and/or the processor's determination of whether the access is to a perfmon counter or an MSR associated with a perfmon counter that is not allocated to the executing VM. In embodiments, the processor's response may be performed by execution unit 120 and/or based on one or more control signals generated by instruction unit 110 and/or by other circuitry, logic, and/or microcode in processor 100.

Embodiments provide for any single perfmon counter and/or any combination of perfmon counters to be allocated to any VM. For example, any VM may have its own VM/guest control information/state (e.g., in a VMCS) with its own PERF_VIRT and PERF_MASK, which may be different from that for any other VM. In embodiments, in connection with a VM entry to a VM, the guest/VM control information/state for that VM is loaded and/or becomes active, such that perfmon counters are allocated to that VM based on its own VM/guest control information/state. In embodiments, when a guest is executing on a VM, any perfmon counters not allocated to the VM may be (e.g., implicitly) allocated to the VMM. For convenience, a perfmon counter allocated to a VM may be referred to as a VM-owned or guest-owned counter and a perfmon counter allocated to a VMM may be referred to as a VMM-owned or host-owned counter.

In embodiments, when a perfmon counter is allocated to an executing VM (e.g., the processor is in non-root mode, the value of PERF_VIRT is 1, and the value of the PERF_MASK bit corresponding to the perfmon counter is 1), the processor may allow access. However, when one or more perfmon counters are allocated to the VMM (e.g., host-owned, not allocated to the VM) while the VM is executing (e.g., the processor is in non-root mode, the value of PERF_VIRT is 1, and the value of the PERF_MASK bit corresponding to the perfmon counter is 0), the processor may respond to the following instructions, without/instead of a VM exit, as follows:
- An instruction to read the counter (e.g., RDPMC) raises an exception (e.g., #GP(0)).
- An instruction to read from a mixed MSR (e.g., RDMSR) returns 0 for bits corresponding to the host-owned counter(s).
- An instruction to write to a mixed MSR (e.g., WRMSR) raises an exception (#GP(0)) exception on attempts to set bits corresponding to the host-owned counter(s).

In embodiments, a VMM may still virtualize CPUID such that the processor prevents VM access to non-mixed host-owned perfmon MSRs as before (e.g., intercept with a VM exit).

As mentioned above, the value of the PERF_MASK field may affect guest execution of an instruction to read perfmon counters (e.g., RDPMC) instruction and guest access to mixed perfmon MSRs. These may be MSRs that contain bits that control (or provide the status of) multiple perfmon counters. In embodiments according to an Intel^{®} 64 and/or IA32 architecture, the set of mixed perfmon MSRs may include (but is not limited to) the following MSRs (other architectures may have corresponding and/or similar registers which may be included in embodiments):
- IA32_PERF_GLOBAL_CTRL
- IA32_FIXED_CTR_CTRL
- IA32_PERF_GLOBAL_OVF_CTRL
- IA32_PERF_GLOBAL_STATUS
- IA32_PERF_GLOBAL_STATUS_SET
- IA32_PERF_GLOBAL_STATUS_RESET
- IA32_ PERF_GLOBAL_INUSE

However, in embodiments, values in the PERF_MASK field do not affect guest access to a non-mixed perfmon MSR (i.e., an MSR that corresponds to a single perfmon counter). The VMM is expected to allow guest access only to non-mixed MSRs that correspond to guest-owned perfmon counters. In embodiments according to an Intel^{®} 64 and/or IA32 architecture, the set of non-mixed perfmon MSRs may include (but is not limited to) the following MSRs (other architectures may have corresponding and/or similar registers which may be included in embodiments):
- IA32_PMCx (where x is a PMC number)
- IA32_A_PMCx (where x is PMC number)
- IA32_FIXED_CTRx (where x is FC number)
- IA32_PERF_METRICS
- IA32_APERF
- IA32_MPERF
- IA32_PPERF

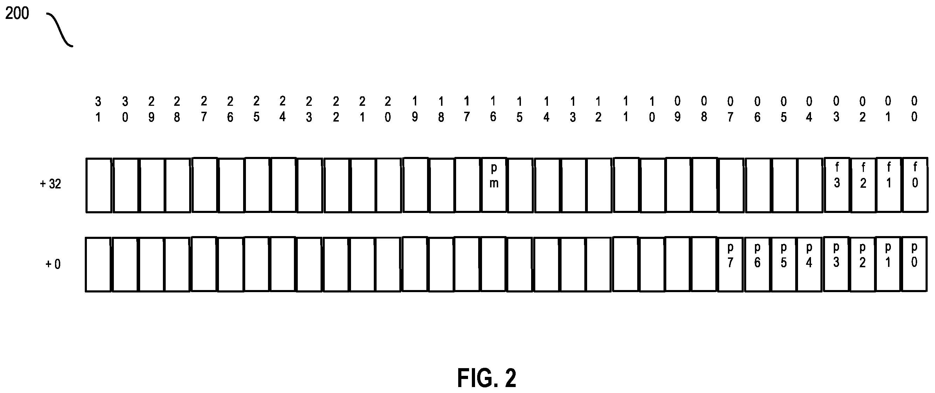

FIG. 2 illustrates an example layout/format 200 of a 64-bit PERF_MASK for a processor having eight PMCs and four FCs. For convenience, the lower order bit positions (31:0) are represented as the bottom row and the higher order bit positions (32:63) are represented as the top row. In each row, the bit positions increase from right to left (i.e., bit position 0 is the rightmost bit of the bottom row, bit position 31 is the leftmost bit of the bottom row, bit position 32 is the rightmost bit of the top row, bit position 63 is the leftmost bit of the top row).

In Figure 2, px in a bit position, where x is a number, represents a PMC identified by the number. For example, p0 represents a PMC identified as PMC0, and its position in bit position 0 means that bit 0 of the bit mask corresponds to PMCO (e.g., when the value of bit 0 is 1, PMCO is allocated to the VM, and when the value of bit 0 is 0, PMCO is allocated to the VMM). Also, fx in a bit position, where x is a number, represents an FC identified by the number. For example, f0 represents an FC identified as FC0, and its position in bit position 32 means that bit 32 of the bit mask corresponds to FC0 (e.g., when the value of bit 32 is 1, FC0 is allocated to the VM, and when the value of bit 32 is 0, FC0 is allocated to the VMM).

Also in Figure 2, pm in bit position 48 represents a performance metrics capability (e.g., corresponding to the PERF_METRICS MSR) and that the value in bit position 48 corresponds to that capability (e.g., when the value of bit 48 is 1, the performance metrics capability is allocated to the VM, and when the value of bit 48 is 0, the performance metrics capability is allocated to the VMM). In embodiments, a performance metrics capability may use perfmon counters in a top-down microarchitectural analysis method (TMAM or MTA) for identifying performance bottlenecks in an out-of-order processor core. A performance metrics capability is just one example of a performance monitoring capability that may be allocated to a VM, in addition to or instead of direct control of perfmon counters.

To summarize and generalize an example layout of a 64-bit PERF_MASK for a processor that supports up to 32 PMCs, 16 FCs, and a performance metrics capability:
- Bits 31:0 control guest access to PMCs 31...0. If PERF_MASK[j] == 0 (where 0<=j<32), then any guest attempt to read PMC j using a RDPMC instruction or to set bits corresponding to PMC j in a mixed perfmon MSRs will raise #GP, even if PMC j is physically supported by the underlying processor.
- Bits 47:32 control guest access to FCs 15...0. If PERF_MASK[j + 32] == 0 (where 0<=j<16), then any guest attempt to read FC j using a RDPMC instruction or to set bits corresponding to FC j in a mixed perfmon MSRs will raise #GP, even if FC j is physically supported by the underlying processor.
- Bit 48 controls guest access to an MSR for a performance metrics capability (e.g., IA32_PERF_METRICS MSR). If PERF_MASK[48] == 0, then any guest attempt to read IA32_PERF_METRICS using a RDPMC instruction or to set bits corresponding to IA32_PERF_METRICS in a mixed Perfmon MSRs will raise #GP, even if IA32_PERF_METRICS is physically supported by the underlying processor.
- Bits 63:49 may be reserved for other usages.

As an example, setting PERF_VIRT to 1 and PERF_MASK to 0x1.0000.0007 in a processor that physically supports eight PMCs (e.g., PMCO to PMC7), four FCs (e.g., FC0 to FC3) and performance metrics means that only PMC0, PMC1, PMC2, and FC0 are guest-owned, while PMC3, PMC4, PMC5, PMC6, PMC7, FC1, FC2, FC3, and PERF_METRICS are host-owned.

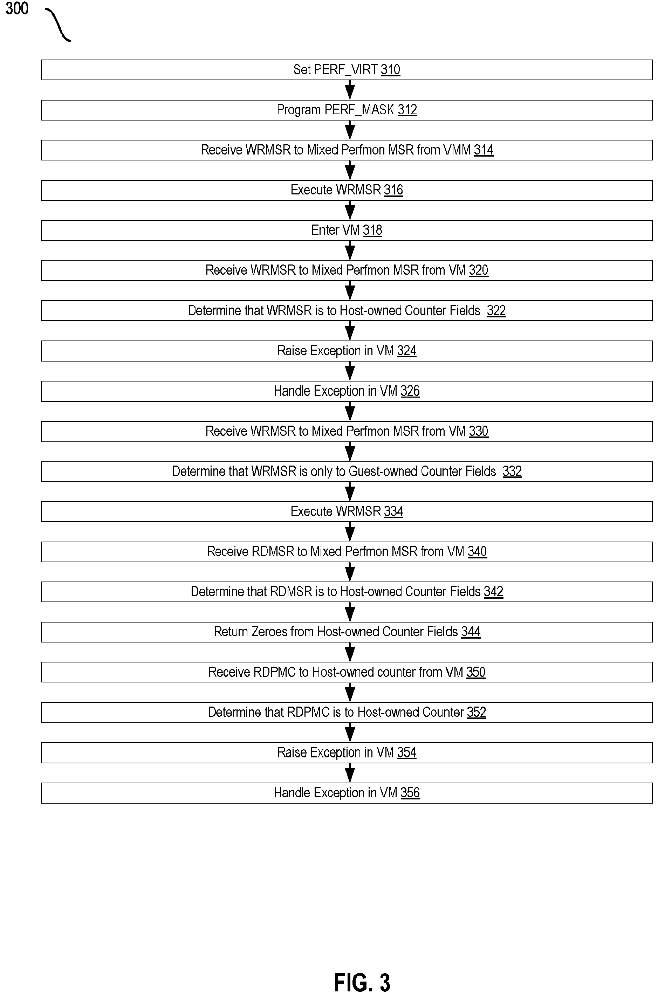

FIG. 3 illustrates a method 300 for flexible virtualization of performance monitoring according to an embodiment. Method 300 may be performed by and/or in connection with the operation of a processor such as processor 100 in Figure 1; therefore, all or any portion of the preceding description of processor may be applicable to method 300.

In 310, a control indicator (e.g., a PERF_VIRT bit in a VMCS for a VM) is configured (e.g., by a VMM executing in root mode) to enable (e.g., set to 1) a flexible virtualization of performance monitoring feature in a processor having a set of fixed-function perfmon counters (e.g., FC0 to FC3) and a set of general-purpose perfmon counters (e.g., PMCO to PMC7). In 312, a bit mask (e.g., a PERF_MASK field in the VCMS for the VM) is configured (e.g., by the VMM executing in root mode) to allocate a subset of the FCs (e.g., FC0) and/or a subset of the PMCs (e.g., PMC0, PMC1, and PMC2) to the VM.

In 314, while the VMM is being executed in root mode, an instruction (e.g., WRMSR) attempting to write to a mixed perfmon MSR (e.g., PERF_GLOBAL_CTRL) to enable all host-owned perfmon counters (e.g., PMC3, PMC4, PMC5, PMC6, PMC7, FC1, FC2, and FC3) is received (e.g., by an instruction unit of the processor). In 316, the instruction is executed (e.g., by an execution unit of the processor).

In 318, an instruction (e.g., a VM enter instruction) is executed (e.g., by an execution unit of the processor) to transfer control from the VMM being executed in root-mode to a guest being executed in non-root mode on the VM).

In 320, while the guest is being executed in non-root mode on the VM, an instruction (e.g., WRMSR) attempting to write to the mixed perfmon MSR (e.g., PERF_GLOBAL_CTRL) to enable all perfmon counters (e.g., FC0 to FC3 and PMCO to PMC7) is received (e.g., by the instruction unit of the processor). In 322, it is determined (e.g., by the processor based on the instruction, its operands, and PERF_MASK) that the instruction is attempting to enable (e.g., set enable bits corresponding to) one or more host-owned perfmon counters (e.g., PMC3, PMC4, PMC5, PMC6, PMC7, FC1, FC2, and FC3). In 324, in response to the determination, an exception is raised (e.g., by the processor) without/instead of a VM exit, and the instruction is not executed. In 326, the exception is handled within the VM.

In 330, while the guest is being executed in non-root mode on the VM, an instruction (e.g., WRMSR) attempting to write to the mixed perfmon MSR (e.g., PERF_GLOBAL_CTRL) to enable a subset of the FCs (e.g., FC0) and a subset of the PMCs (e.g., PMC0, PMC1, and PMC2) is received (e.g., by the instruction unit of the processor). In 332, it is determined (e.g., by the processor based on the instruction, its operands, and PERF_MASK) that the instruction is attempting to enable (e.g., set enable bits corresponding to) only guest-owned perfmon counters (e.g., PMC0, PMC1, PMC2, and FC0) and no host-owned perfmon counters (e.g., PMC3, PMC4, PMC5, PMC6, PMC7, FC1, FC2, and FC3). In 334, in response to the determination, the instruction is executed within the VM.

In 340, while the guest is being executed in non-root mode on the VM, an instruction (e.g., RDMSR) attempting to read the mixed perfmon MSR (e.g., PERF_GLOBAL_CTRL) to access information (e.g., bits) corresponding to one or more host-owned perfmon counters (e.g., PMC3, PMC4, PMC5, PMC6, PMC7, FC1, FC2, and FC3) is received (e.g., by the instruction unit of the processor). In 342, it is determined (e.g., by the processor based on the instruction, its operands, and PERF_MASK) that the instruction is attempting to access information (e.g., bits) corresponding to one or more host-owned perfmon counters. In 344, in response to the determination, the instruction is executed within the VM, with actual information being returned for guest-owned perfmon counters but predetermined information (e.g., bit values of 0) being returned for host-owned counters, without/instead of a VM exit.

In 350, while the guest is being executed in non-root mode on the VM, an instruction (e.g., RDPMC) attempting to read one of the host-owned perfmon counters (e.g., PMC3, PMC4, PMC5, PMC6, PMC7, FC1, FC2, or FC3) is received (e.g., by the instruction unit of the processor). In 352, it is determined (e.g., by the processor based on the instruction, its operands, and PERF_MASK) that the instruction is attempting to read one of the host-owned perfmon counters. In 354, in response to the determination, an exception is raised (e.g., by the processor) without/instead of a VM exit, and the instruction is not executed. In 356, the exception is handled within the VM.

According to some examples, an apparatus includes a plurality of performance monitoring hardware resources and an instruction decoder to decode a first instruction to access a first performance monitoring hardware resource of the plurality of performance monitoring hardware resources. In response to the first instruction being received by a virtual machine, the apparatus is to determine whether the first performance monitoring hardware resource is allocated to the virtual machine based on an allocation model to allow any set of the performance monitoring hardware resources to be allocated to the virtual machine, execute the first instruction within the virtual machine in response to a determination that the first performance monitoring hardware resource is allocated to the virtual machine, and raise an exception within the virtual machine in response to a determination that the first performance monitoring hardware resource is not allocated to the virtual machine.

According to some examples, a method includes allocating, according to an allocation model to allow any subset of a set of performance monitoring hardware resources to be allocated to a virtual machine, a subset of a set of performance monitoring hardware resources to a virtual machine; receiving, by the virtual machine on the processor, a first instruction to access a first performance monitoring hardware resource of the set of performance monitoring hardware resources; in response to the first instruction being received by the virtual machine, determining whether the first performance monitoring hardware resource is allocated to the virtual machine; executing the first instruction within the virtual machine in response to a determination that the first performance monitoring hardware resource is allocated to the virtual machine; and raising an exception within the virtual machine in response to a determination that the first performance monitoring hardware resource is not allocated to the virtual machine.

The method may also include receiving, by the virtual machine on the processor, a second instruction to access a storage location, the storage location associated with the first performance monitoring hardware resource and a second performance monitoring hardware resource of the set of performance monitoring hardware resources the set of performance monitoring hardware resources; in response to the second instruction being received by the virtual machine, determining whether the second performance monitoring hardware resource is allocated to the virtual machine based on the allocation model; executing the second instruction within the virtual machine in response to a determination that the first performance monitoring hardware resource and the second performance monitoring are allocated to the virtual machine; and raising an exception within the virtual machine in response to a determination that either the first performance monitoring hardware resource or the second performance monitoring hardware resource is not allocated to the virtual machine.

The method may also include receiving, by the virtual machine on the processor, a third instruction to read the storage location; returning content of a first field of the storage location associated with the first performance monitoring resource in response to a determination that the first performance monitoring hardware resource is allocated to the virtual machine; and returning a predetermined value instead of content of a second field of the storage location associated with the second performance monitoring resource in response to a determination that the second performance monitoring hardware resource is not allocated to the virtual machine.

According to some examples, a system includes a system memory and a processor. The system memory is to store a control structure for a virtual machine. The processor includes a plurality of performance monitoring hardware resources and an instruction decoder to decode a first instruction to access a first performance monitoring hardware resource of the plurality of performance monitoring hardware resources. In response to the first instruction being received by the virtual machine, the apparatus is to determine whether the first performance monitoring hardware resource is allocated to the virtual machine based on an allocation model to allow any set of the performance monitoring hardware resources to be allocated to the virtual machine, execute the first instruction within the virtual machine in response to a determination that the first performance monitoring hardware resource is allocated to the virtual machine, and raise an exception within the virtual machine in response to a determination that the first performance monitoring hardware resource is not allocated to the virtual machine.

Any such examples may include any or any combination of the following aspects. The first performance monitoring hardware resource may include a first counter. The first instruction may be to read the first counter. The apparatus or processor may also include a storage location, wherein the instruction decoder is also to decode a second instruction to access the storage location, the storage location associated with the first performance monitoring hardware resource and a second performance monitoring hardware resource of the plurality of performance monitoring hardware resources. In response to the second instruction being received by the virtual machine, the apparatus or processor may determine whether the second performance monitoring hardware resource is allocated to the virtual machine based on the allocation model, execute second instruction within the virtual machine in response to a determination that the first performance monitoring hardware resource and the second performance monitoring are allocated to the virtual machine, and raise an exception within the virtual machine in response to a determination that either the first performance monitoring hardware resource or the second performance monitoring hardware resource is not allocated to the virtual machine. The second instruction may be to write to the storage location. The second instruction may be to write to the storage location to enable the first performance monitoring hardware resource and the second performance monitoring hardware resource. The instruction decoder may also be to decode a third instruction to read the storage location, and, in response to the third instruction being received by the virtual machine, the apparatus or processor is to execute the third instruction within the virtual machine, wherein execution of the third instruction includes returning content of a first field of the storage location associated with the first performance monitoring resource in response to a determination that the first performance monitoring hardware resource is allocated to the virtual machine, and returning a predetermined value instead of content of a second field of the storage location associated with the second performance monitoring resource in response to a determination that the second performance monitoring hardware resource is not allocated to the virtual machine. The third instruction may be to read a first status associated with the first performance monitoring hardware resource and a second status associated with the second performance monitoring hardware resource. The apparatus or processor may determine whether the first performance monitoring hardware resource is allocated to the virtual machine further based on a data structure having a plurality of fields, each of the plurality of fields corresponding to one of the performance monitoring hardware resources and to indicate whether the one of the performance hardware resources is to be allocated to the virtual machine. The data structure may be included in a virtual machine control structure for the virtual machine. The data structure may be a bitmap having one bit per performance monitoring hardware resource.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when executed by a machine causes the machine to perform any method or portion of a method disclosed herein. Embodiments may include any details, features, etc. or combinations of details, features, etc. described in this specification.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller units circuitry 516 couple the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram.

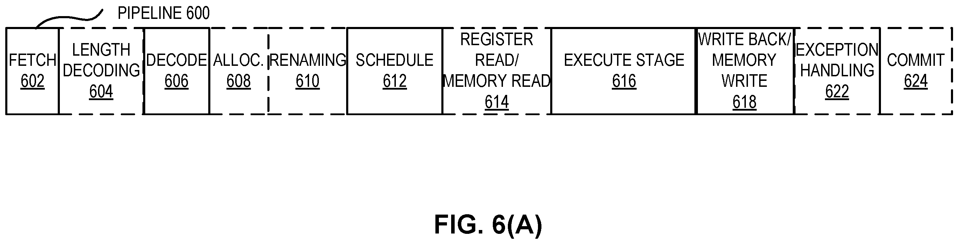

FIG. 6(A) is a block diagram illustrating both an example in-order pipeline and an example register renaming, out-of-order issue/execution pipeline according to examples. FIG. 6(B) is a block diagram illustrating both an example in-order architecture core and an example register renaming, out-of-order issue/execution architecture core to be included in a processor according to examples. The solid lined boxes in FIGS. 6(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6(A), a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6(B) may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6(B) shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry.

FIG. 7 illustrates examples of execution unit(s) circuitry, such as execution unit(s) circuitry 662 of FIG. 6(B). As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

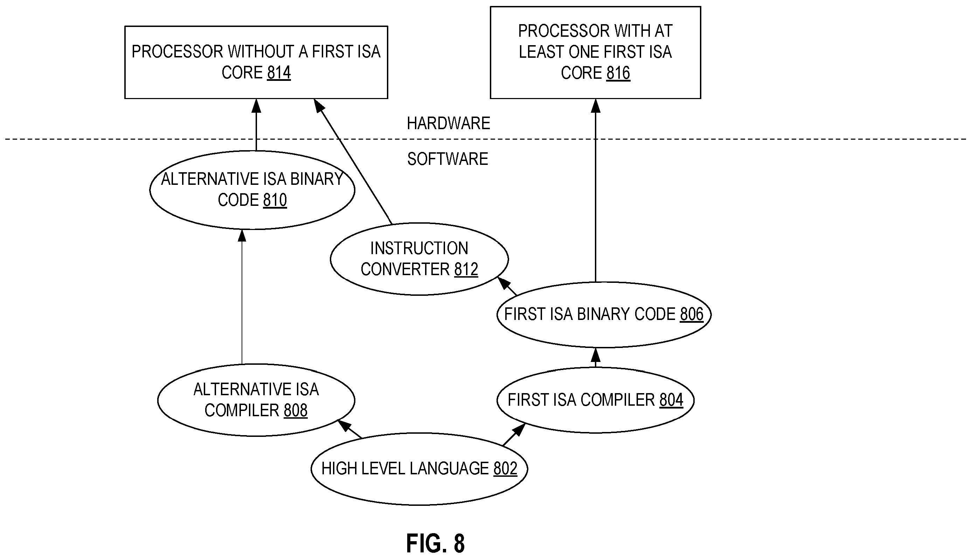

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases are not necessarily referring to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

## Claims

1. An apparatus comprising:
a plurality of performance monitoring hardware resources, the plurality of performance monitoring hardware resources including a plurality of performance counters; and
an instruction decoder to decode a first instruction to access a first performance monitoring hardware resource of the plurality of performance monitoring hardware resources, the first performance monitoring hardware resource including a first performance counter,
wherein, in response to the first instruction being received by a virtual machine, the apparatus is to:
determine whether the first performance monitoring hardware resource is allocated to the virtual machine based on an allocation model to allow for selective allocation of performance counters including any set of the performance counters of the plurality of performance counters to be allocated to the virtual machine,
execute the first instruction within the virtual machine in response to a determination that the first performance monitoring hardware resource is allocated to the virtual machine, and
raise an exception within the virtual machine in response to a determination that the first performance monitoring hardware resource is not allocated to the virtual machine.

2. The apparatus of claim 1, wherein the first instruction is to read the first performance counter.

3. The apparatus of any of claims 1 or 2, further comprising a storage location, wherein the instruction decoder is also to decode a second instruction to access the storage location, the storage location associated with the first performance monitoring hardware resource and a second performance monitoring hardware resource of the plurality of performance monitoring hardware resources.

4. The apparatus of claim 3, wherein, in response to the second instruction being received by the virtual machine, the apparatus is to:
determine whether the second performance monitoring hardware resource is allocated to the virtual machine based on the allocation model,
execute second instruction within the virtual machine in response to a determination that the first performance monitoring hardware resource and the second performance monitoring are allocated to the virtual machine, and
raise an exception within the virtual machine in response to a determination that either the first performance monitoring hardware resource or the second performance monitoring hardware resource is not allocated to the virtual machine.

5. The apparatus of claim 4, wherein the second instruction is to write to the storage location.

6. The apparatus of claim 5, wherein the second instruction is to write to the storage location to enable the first performance monitoring hardware resource and the second performance monitoring hardware resource.

7. The apparatus of claim 5, wherein the instruction decoder is also to decode a third instruction to read the storage location, and, in response to the third instruction being received by the virtual machine, the apparatus is to execute the third instruction within the virtual machine, wherein execution of the third instruction includes:
returning content of a first field of the storage location associated with the first performance monitoring resource in response to a determination that the first performance monitoring hardware resource is allocated to the virtual machine, and
returning a predetermined value instead of content of a second field of the storage location associated with the second performance monitoring resource in response to a determination that the second performance monitoring hardware resource is not allocated to the virtual machine.

8. The apparatus of claim 7, wherein the third instruction is to read a first status associated with the first performance monitoring hardware resource and a second status associated with the second performance monitoring hardware resource.

9. The apparatus of any of claims 1 to 8, wherein the apparatus is to determine whether the first performance monitoring hardware resource is allocated to the virtual machine further based on a data structure having a plurality of fields, each of the plurality of fields corresponding to one of the performance monitoring hardware resources and to indicate whether the one of the performance hardware resources is to be allocated to the virtual machine.

10. A method comprising:
providing a plurality of performance monitoring hardware resources, the plurality of performance monitoring hardware resources including a plurality of performance counters;
allocating, according to an allocation model to allow for selective allocation of performance counters including any subset of a set of performance counters of the plurality of performance counters to be allocated to a virtual machine, a subset of a set of performance counters of the plurality of performance counters to a virtual machine;
receiving, by the virtual machine on the processor, a first instruction to access a first performance counter of the set of performance counters, wherein the first instruction is to read the performance counter;
in response to the first instruction being received by the virtual machine, determining whether the first performance counter is allocated to the virtual machine;
executing the first instruction within the virtual machine in response to a determination that the first performance counter is allocated to the virtual machine; and
raising an exception within the virtual machine in response to a determination that the first performance counter is not allocated to the virtual machine.

11. The method of claim 10, further comprising:
receiving, by the virtual machine on the processor, a second instruction to write to a storage location to enable the first performance counter and a second performance counter of the set of performance counters;
in response to the second instruction being received by the virtual machine, determining whether the second performance counter is allocated to the virtual machine based on the allocation model;
executing the second instruction within the virtual machine in response to a determination that the first performance counter and the second performance counter are allocated to the virtual machine; and
raising an exception within the virtual machine in response to a determination that either the first performance counter or the second performance counter is not allocated to the virtual machine.

12. The method of claim 11, further comprising:
receiving, by the virtual machine on the processor, a third instruction to read from the storage location a first status associated with the first performance counter and a second status associated with the second performance counter;
returning content of a first field of the storage location associated with the first performance counter in response to a determination that the first performance counter is allocated to the virtual machine; and
returning a predetermined value instead of content of a second field of the storage location associated with the second performance counter in response to a determination that the second performance counter is not allocated to the virtual machine.

13. A system comprising:
a system memory to store a control structure for a virtual machine; and
an apparatus according to any one of claims 1 to 9.

## Patentansprüche

1. Vorrichtung, die Folgendes umfasst:
eine Vielzahl von Leistungsüberwachungs-Hardwareressourcen, wobei die Vielzahl von Leistungsüberwachungs-Hardwareressourcen eine Vielzahl von Leistungszählern aufweist; und
einen Anweisungsdecoder zum Decodieren einer ersten Anweisung zum Zugreifen auf eine erste Leistungsüberwachungs-Hardwareressource der Vielzahl von Leistungsüberwachungs-Hardwareressourcen, wobei die erste Leistungsüberwachungs-Hardwareressource einen ersten Leistungszähler aufweist,
wobei als Reaktion darauf, dass die erste Anweisung durch eine virtuelle Maschine empfangen wird, die Vorrichtung für Folgendes ausgelegt ist:
Bestimmen, ob die erste Leistungsüberwachungs-Hardwareressource der virtuellen Maschine zugewiesen ist, basierend auf einem Zuordnungsmodell, um eine selektive Zuweisung von Leistungszählern zu ermöglichen, die einen beliebigen Satz der Leistungszähler der Vielzahl von Leistungszählern aufweisen, die der virtuellen Maschine zugewiesen werden sollen,
Ausführen der ersten Anweisung innerhalb der virtuellen Maschine als Reaktion auf eine Bestimmung, dass die erste Leistungsüberwachungs-Hardwareressource der virtuellen Maschine zugewiesen ist, und
Auslösen einer Ausnahme innerhalb der virtuellen Maschine als Reaktion auf eine Bestimmung, dass die erste Leistungsüberwachungs-Hardwareressource nicht der virtuellen Maschine zugewiesen ist.

2. Vorrichtung nach Anspruch 1, wobei die erste Anweisung dazu dient, den ersten Leistungszähler zu lesen.

3. Vorrichtung nach einem der Ansprüche 1 oder 2, die ferner einen Speicherort umfasst, wobei der Anweisungsdecoder auch dazu dient, eine zweite Anweisung zu decodieren, um auf den Speicherort zuzugreifen, wobei der Speicherort mit der ersten Leistungsüberwachungs-Hardwareressource und einer zweiten Leistungsüberwachungs-Hardwareressource der Vielzahl von Leistungsüberwachungs-Hardwareressourcen assoziiert ist.

4. Vorrichtung nach Anspruch 3, wobei die Vorrichtung als Reaktion darauf, dass die zweite Anweisung durch die virtuelle Maschine empfangen wird, für Folgendes ausgelegt ist:
Bestimmen, ob die zweite Leistungsüberwachungs-Hardwareressource der virtuellen Maschine basierend auf dem Zuordnungsmodell zugewiesen ist,
Ausführen einer zweiten Anweisung innerhalb der virtuellen Maschine als Reaktion auf eine Bestimmung, dass die erste Leistungsüberwachungs-Hardwareressource und die zweite Leistungsüberwachungsüberwachung der virtuellen Maschine zugewiesen sind, und
Auslösen einer Ausnahme innerhalb der virtuellen Maschine als Reaktion auf eine Bestimmung, dass entweder die erste Leistungsüberwachungs-Hardwareressource oder die zweite Leistungsüberwachungs-Hardwareressource nicht der virtuellen Maschine zugewiesen ist.

5. Vorrichtung nach Anspruch 4, wobei die zweite Anweisung dazu dient, in den Speicherort zu schreiben.

6. Vorrichtung nach Anspruch 5, wobei die zweite Anweisung dazu dient, in den Speicherort zu schreiben, um die erste Leistungsüberwachungs-Hardwareressource und die zweite Leistungsüberwachungs-Hardwareressource zu aktivieren.

7. Vorrichtung nach Anspruch 5, wobei der Anweisungsdecoder auch dazu dient, eine dritte Anweisung zum Lesen des Speicherorts zu decodieren, und als Reaktion darauf, dass die dritte Anweisung durch die virtuelle Maschine empfangen wird, die Vorrichtung dazu ausgelegt ist, die dritte Anweisung innerhalb der virtuellen Maschine auszuführen, wobei die Ausführung der dritten Anweisung Folgendes beinhaltet:
Zurückgeben von Inhalt eines ersten Felds des Speicherorts, der mit der ersten Leistungsüberwachungsressource assoziiert ist, als Reaktion auf eine Bestimmung, dass die erste Leistungsüberwachungs-Hardwareressource der virtuellen Maschine zugewiesen ist, und
Zurückgeben eines vorbestimmten Werts anstelle des Inhalts eines zweiten Feldes des Speicherorts, der mit der zweiten Leistungsüberwachungsressource assoziiert ist, als Reaktion auf eine Bestimmung, dass die zweite Leistungsüberwachungs-Hardwareressource nicht der virtuellen Maschine zugewiesen ist.

8. Vorrichtung nach Anspruch 7, wobei die dritte Anweisung dazu dient, einen ersten Status, der mit der ersten Leistungsüberwachungs-Hardwareressource assoziiert ist, und einen zweiten Status, der mit der zweiten Leistungsüberwachungs-Hardwareressource assoziiert ist, zu lesen.

9. Vorrichtung nach einem der Ansprüche 1 bis 8, wobei die Vorrichtung zum Bestimmen, ob die erste Leistungsüberwachungs-Hardwareressource der virtuellen Maschine zugewiesen ist, ferner basierend auf einer Datenstruktur mit einer Vielzahl von Feldern, wobei jedes der Vielzahl von Feldern einer der Leistungsüberwachungs-Hardwareressourcen entspricht, und zum Anzeigen, ob die eine der Leistungsüberwachungs-Hardwareressourcen der virtuellen Maschine zugewiesen werden soll, ausgelegt ist.

10. Verfahren, das Folgendes umfasst:
Bereitstellen einer Vielzahl von Leistungsüberwachungs-Hardwareressourcen, wobei die Vielzahl von Leistungsüberwachungs-Hardwareressourcen eine Vielzahl von Leistungszählern aufweist;
Zuordnen, gemäß einem Zuordnungsmodell, um eine selektive Zuweisung von Leistungszählern einschließlich einer beliebigen Teilmenge eines Satzes von Leistungszählern der Vielzahl von Leistungszählern, die einer virtuellen Maschine zuzuordnen sind, zu aktivieren, einer Teilmenge eines Satzes von Leistungszählern der Vielzahl von Leistungszählern zu einer virtuellen Maschine;
Empfangen, durch die virtuelle Maschine auf dem Prozessor, einer ersten Anweisung zum Zugreifen auf einen ersten Leistungszähler des Satzes von Leistungszählern, wobei die erste Anweisung dazu dient, den Leistungszähler zu lesen;
als Reaktion darauf, dass die erste Anweisung durch die virtuelle Maschine empfangen wird, Bestimmen, ob der erste Leistungszähler der virtuellen Maschine zugewiesen ist;
Ausführen der ersten Anweisung innerhalb der virtuellen Maschine als Reaktion auf eine Bestimmung, dass der erste Leistungszähler der virtuellen Maschine zugewiesen ist; und
Auslösen einer Ausnahme innerhalb der virtuellen Maschine als Reaktion auf eine Bestimmung, dass der erste Leistungszähler nicht der virtuellen Maschine zugewiesen ist.

11. Verfahren nach Anspruch 10, das ferner Folgendes umfasst:
Empfangen, durch die virtuelle Maschine auf dem Prozessor, einer zweiten Anweisung zum Schreiben in einen Speicherort, um den ersten Leistungszähler und einen zweiten Leistungszähler des Satzes von Leistungszählern zu aktivieren;
als Reaktion darauf, dass die zweite Anweisung durch die virtuelle Maschine empfangen wird, Bestimmen, ob der zweite Leistungszähler der virtuellen Maschine basierend auf dem Zuordnungsmodell zugewiesen ist;
Ausführen der zweiten Anweisung innerhalb der virtuellen Maschine als Reaktion auf eine Bestimmung, dass der erste Leistungszähler und der zweite Leistungszähler der virtuellen Maschine zugewiesen sind; und
Auslösen einer Ausnahme innerhalb der virtuellen Maschine als Reaktion auf eine Bestimmung, dass entweder der erste Leistungszähler oder der zweite Leistungszähler nicht der virtuellen Maschine zugewiesen ist.

12. Verfahren nach Anspruch 11, das ferner Folgendes umfasst:
Empfangen, durch die virtuelle Maschine auf dem Prozessor, einer dritten Anweisung zum Lesen eines ersten Status, der mit dem ersten Leistungszähler assoziiert ist, und eines zweiten Status, der mit dem zweiten Leistungszähler assoziiert ist, von dem Speicherort;
Zurückgeben von Inhalt eines ersten Felds des Speicherorts, der mit dem ersten Leistungszähler assoziiert ist, als Reaktion auf eine Bestimmung, dass der erste Leistungszähler der virtuellen Maschine zugewiesen ist; und
Zurückgeben eines vorbestimmten Wertes anstelle des Inhalts eines zweiten Felds des Speicherorts, der mit dem zweiten Leistungszähler assoziiert ist, als Reaktion auf eine Bestimmung, dass der zweite Leistungszähler nicht der virtuellen Maschine zugewiesen ist.

13. System, das Folgendes umfasst:
einen Systemspeicher zum Speichern einer Steuerstruktur für eine virtuelle Maschine; und
eine Vorrichtung nach einem der Ansprüche 1 bis 9,

## Revendications

1. Appareil comprenant :
une pluralité de ressources matérielles de surveillance de performance, la pluralité de ressources matérielles de surveillance de performance incluant une pluralité de compteurs de performance ; et
un décodeur d'instructions pour décoder une première instruction pour accéder à une première ressource matérielle de surveillance de performance de la pluralité de ressources matérielles de surveillance de performance, la première ressource matérielle de surveillance de performance incluant un premier compteur de performance, dans lequel, en réponse la réception de la première instruction par une machine virtuelle, l'appareil doit :
déterminer si la première ressource matérielle de surveillance de performance est allouée à la machine virtuelle sur la base d'un modèle d'allocation pour permettre une allocation sélective de compteurs de performance incluant n'importe quel ensemble de compteurs de performance de la pluralité de compteurs de performance à allouer à la machine virtuelle,
exécuter la première instruction au sein de la machine virtuelle en réponse à une détermination que la première ressource matérielle de surveillance de performance est allouée à la machine virtuelle, et
soulever une exception au sein de la machine virtuelle en réponse à une détermination que la première ressource matérielle de surveillance de performance n'est pas allouée à la machine virtuelle.

2. Appareil selon la revendication 1, dans lequel la première instruction est de lire le premier compteur de performance.

3. Appareil selon l'une quelconque des revendications 1 ou 2, comprenant en outre un emplacement de stockage, dans lequel le décodeur d'instructions est également destiné à décoder une deuxième instruction pour accéder à l'emplacement de stockage, l'emplacement de stockage associé à la première ressource matérielle de surveillance de performance et une deuxième ressource matérielle de surveillance de performance de la pluralité de ressources matérielles de surveillance de performance.

4. Appareil selon la revendication 3, dans lequel, en réponse à la deuxième instruction reçue par la machine virtuelle, l'appareil doit :
déterminer si la deuxième ressource matérielle de surveillance de performance est allouée à la machine virtuelle sur la base du modèle d'allocation,
exécuter une deuxième instruction dans la machine virtuelle en réponse à une détermination selon laquelle la première ressource matérielle de surveillance de performance et la deuxième surveillance de performance sont allouées à la machine virtuelle, et
soulever une exception au sein de la machine virtuelle en réponse à la détermination que la première ressource matérielle de surveillance de performance ou la deuxième ressource matérielle de surveillance de performance n'est pas allouée à la machine virtuelle.

5. Appareil selon la revendication 4, dans lequel la deuxième instruction est d'écrire sur l'emplacement de stockage.

6. Appareil selon la revendication 5, dans lequel la deuxième instruction est d'écrire sur l'emplacement de stockage pour activer la première ressource matérielle de surveillance de performance et la deuxième ressource matérielle de surveillance de performance.

7. Appareil selon la revendication 5, dans lequel le décodeur d'instructions doit également décoder une troisième instruction pour lire l'emplacement de stockage, et, en réponse à la troisième instruction reçue par la machine virtuelle, l'appareil doit exécuter la troisième instruction au sein de la machine virtuelle, l'exécution de la troisième instruction incluant :
le renvoi du contenu d'un premier champ de l'emplacement de stockage associé à la première ressource de surveillance de performance en réponse à une détermination selon laquelle la première ressource matérielle de surveillance de performance est allouée à la machine virtuelle, et
le renvoi d'une valeur prédéterminée au lieu du contenu d'un deuxième champ de l'emplacement de stockage associé à la deuxième ressource de surveillance de performance en réponse à une détermination selon laquelle la deuxième ressource matérielle de surveillance de performance n'est pas allouée à la machine virtuelle.

8. Appareil selon la revendication 7, dans lequel la troisième instruction consiste à lire un premier état associé à la première ressource matérielle de surveillance de performance et un deuxième état associé à la deuxième ressource matérielle de surveillance de performance.

9. Appareil selon l'une quelconque des revendications 1 à 8, dans lequel l'appareil est destiné à déterminer si la première ressource matérielle de surveillance de performance est allouée à la machine virtuelle en outre sur la base d'une structure de données ayant une pluralité de champs, chaque champ parmi la pluralité de champs correspondant à l'une des ressources matérielles de surveillance de performance et à indiquer si celle des ressources matérielles de performance doit être allouée à la machine virtuelle.

10. Procédé comprenant :
la fourniture d'une pluralité de ressources matérielles de surveillance de performance, la pluralité de ressources matérielles de surveillance de performance incluant une pluralité de compteurs de performance ;
l'allocation, selon un modèle d'allocation pour permettre l'allocation sélective de compteurs de performance incluant n'importe quel sous-ensemble d'un ensemble de compteurs de performance de la pluralité de compteurs de performance à allouer à une machine virtuelle, un sous-ensemble d'un ensemble de compteurs de performance de la pluralité de compteurs de performance à une machine virtuelle ;
la réception, par la machine virtuelle sur le processeur, d'une première instruction d'accéder à un premier compteur de performance de l'ensemble de compteurs de performance, la première instruction étant de lire le compteur de performance ;
en réponse à la réception de la première instruction par la machine virtuelle, la détermination de si le premier compteur de performance est alloué à la machine virtuelle ;
l'exécution de la première instruction au sein de la machine virtuelle en réponse à une détermination que le premier compteur de performance est alloué à la machine virtuelle ; et
le soulèvement d'une exception dans la machine virtuelle en réponse à une détermination que le premier compteur de performance n'est pas alloué à la machine virtuelle.

11. Procédé selon la revendication 10, comprenant en outre :
la réception, par la machine virtuelle sur le processeur, d'une deuxième instruction d'écriture dans un emplacement de stockage pour permettre le premier compteur de performance et un deuxième compteur de performance de l'ensemble de compteurs de performance ;
en réponse à la réception de la deuxième instruction par la machine virtuelle, la détermination de si le deuxième compteur de performance est alloué à la machine virtuelle sur la base du modèle d'allocation ;
l'exécution de la deuxième instruction au sein de la machine virtuelle en réponse à une détermination selon laquelle le premier compteur de performance et le deuxième compteur de performance sont alloués à la machine virtuelle ; et
le soulèvement d'une exception au sein de la machine virtuelle en réponse à une détermination selon laquelle le premier compteur de performance ou le deuxième compteur de performance n'est pas alloué à la machine virtuelle.

12. Procédé selon la revendication 11, comprenant en outre :
la réception, par la machine virtuelle sur le processeur, d'une troisième instruction de lecture à partir de l'emplacement de stockage d'un premier état associé au premier compteur de performance et d'un deuxième état associé au deuxième compteur de performance ;
le renvoi du contenu d'un premier champ de l'emplacement de stockage associé au premier compteur de performance en réponse à une détermination que le premier compteur de performance est alloué à la machine virtuelle ; et
le renvoi d'une valeur prédéterminée au lieu du contenu d'un deuxième champ de l'emplacement de stockage associé au deuxième compteur de performance en réponse à une détermination selon laquelle le deuxième compteur de performance n'est pas alloué à la machine virtuelle.

13. Système comprenant :
une mémoire système pour stocker une structure de commande pour une machine virtuelle ; et
appareil selon l'une quelconque des revendications 1 à 9.
